# EUROPEAN PATENT APPLICATION

(11) **EP 2 489 761 A2**
(43) Date of publication of application: **22.08.2012**
(21) Application number: 10823571.4
(22) Date of filing: 11.10.2010
(51) Int. Cl.: C25C 3/16, C25C 3/20, C25C 7/04

(54) **ELECTROLYZER HAVING INCREASED CONTACT SPECIFIC SURFACE AREA FOR THE RECOVERY OF VALUABLE METALS**

(30) Priority: 13.10.2009 KR 20090097231
(71) Applicant: Suk, Sangyoup, Seoul 150-989 (KR)
(72) Inventor: Suk, Sangyoup, Seoul 150-989 (KR)
(74) Representative: Romano, Giuseppe
(86) International application number: PCT/KR2010/006937
(87) International publication number: WO 2011/046332

(57) **Abstract**

It is an object of the present invention to provide an electrolyzer having increased contact specific surface area for the recovery of valuable metals, wherein the electrolyzer comprises: a housing having a rear end with an inlet port and a front end with an outlet port, and having an internal space with a downwardly inclined bottom; a plurality of anodes arranged within the housing such that each of the anodes divides the internal space of the housing in a widthwise direction; and a plurality of cathode units interposed between the anodes to divide the space between the adjacent anodes into two electrolytic spaces. The wastewater introduced through the inlet port sequentially passes through the plurality of electrolytic spaces such that valuable metals are electro-deposited to the cathode units and recovered. Subsequently, the wastewater is discharged through the outlet port. The electrolyzer having increased contact specific surface area for the recovery of valuable metals according to the present invention is advantageous in that each of the cathode units has a second cathode, a first cathode, a third cathode, and cathode wires which fill the spaces among the first, third and second cathodes, to increase the contact specific surface area of the wastewater introduced into the electrolyzer so that valuable metals can be easily electro-deposited and recovered even from the wastewater containing a small amount of valuable metals.

## Description

### Technical Field

The present invention relates to an electrolyzer having an increased contact surface area for recovery of valuable metals which has an increased electrolytic efficiency by maximally increasing the specific surface areas of electrodes where wastewater to be electrolyzed comes in contact, and which allows valuable metals to be effectively electro-deposited and recovered even from low-concentration wastewater.

### Background Art

In general, since a large amount of heavy metals are contained in wastewater, which is generated when valuable metals are recovered for recycling from electronic part scraps including a printed circuit board used for various electronic products or waste catalysts usually generated in chemical factories, wastewater from a plating mill, a textile mill, and other mills, and wastewater generated when a photograph is developed, it is one of pending questions that is very importantly addressed for creating a value of waste resources and preventing environmental pollution to recycle the wastewater and effectively recover valuable metals that are valuable to be recovered from the wastewater.

As a method of recovering valuable metals by processing wastewater containing valuable metals, such as white gold (Pt), palladium (Pd), rhodium (Rh), gold (Au), silver (Ag), and copper (Cu), a method of recovering valuable metals by crushing waste resources and leaching them with a solvent, which is usually acid or alkali, and then using chemical deposition or electrolysis is used.

The electrolysis method is partially used for processing and producing common inorganic compounds or organic compounds, in addition to recovering valuable metals or heavy metals contained in wastewater, but has a defect that it takes long time to perform the processes with the existing electrolysis apparatuses or the efficiency is low and the apparatuses occupy large spaces.

Meanwhile, a processing method that makes wastewater sludge by performing chemical treatment and sinking the sludge is generally used as a wastewater processing method that is currently commonly used in plating mills, such that the method causes severe environmental pollution by discharging valuable metal components contained in wastewater, and the used water without recycling them, and a large amount of cost is necessary for the chemical treatment.

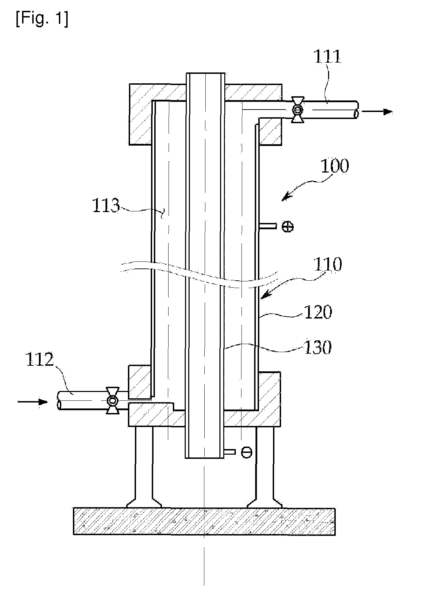

FIG. 1 shows an embodiment of an electrolyzer 100 that electro-deposits and recovers valuable metals from plating-wastewater or wastewater containing the valuable metals in the related art, in which a cylindrical inner electrode plate 130 and a cylindrical outer electrode plate 120 are disposed in a cylindrical housing 110 with an internal space. Further, the housing 110 has an inlet port 112 through which wastewater is introduced, and an outlet port 111.

By this structure, power is supplied from an external power source (not shown) and electricity flows to the inner and outer electrodes 130, 120. The inner electrode 130 and the outer electrode 120 may be freely provided with a polarity, in which one of them has a negative polarity and the other has a positive polarity.

Therefore, the cathode is supplied with electrons from the power source and an electrochemical reduction reaction, in which positive ions are diffused to an electrode surface and is reduced by receiving the electrons, is generated in wastewater in the electrolyzer, such that valuable metals stick to the cathode and are recovered.

However, in the electrolyzer 100 of the related art which has one cathode and one anode, the specific surface area of the cathode is not large, such that the area and the time where the wastewater in the electrolyzer comes in contact with the cathode are small, which is a factor that prevents effective recovery of the valuable metals.

Further, for low-concentration wastewater, that is, wastewater contained valuable metals of 10ppm or less, the contact specific surface area is very small, such that electro-deposition and recovery of the valuable metals are difficult, and accordingly, the efficiency is very low.

In other words, since the reduction is generated only on the surface of one cathode, the reaction speed is limited and a plurality of electrolyzers (100) is necessary for mass production, and the electrolysis efficiency largely decreases, as time passes.

On the other hand, an electrode plate made of titanium (Ti) is generally used for an electrode, which has the advantage that titanium is not melted by nitrohydrochloric acid for recovering the electro-deposited valuable metals, but the electric conductivity is low, such that the surface is plated with metals having high electric conductivity or combinations of the metals for use.

Therefore, it is required to develop an electrolyzer having a structure that makes it possible to increase electrolysis efficiency for recovering valuable metals while having a structure with a large specific surface area that wastewater comes in contact with.

### Disclosure

### Technical Problem

The present invention has been made in effort to solve the problems and it is an object of the present invention to provide an electrolyzer having increased contact specific surface area for the recovery of valuable, in which the electrolyzer include: a housing having a rear end with an inlet port and a front end with an outlet port, and having an internal space with a downwardly inclined bottom; a plurality of anodes arranged within the housing such that each of the anodes divides the internal space of the housing in a widthwise direction; and a plurality of cathode units interposed between the anodes to divide the space between the adjacent anodes into two electrolytic spaces, in which the wastewater introduced through the inlet port sequentially passes through the plurality of electrolytic spaces such that valuable metals are electro-deposited to the cathode units and recovered.

### Technical Solution

In order to achieve the object of the present invention , an electrolyzer having increased contact specific surface area for the recovery of valuable, includes: a housing having a rear end with an inlet port and a front end with an outlet port, and having an internal space with a downwardly inclined bottom; a plurality of anodes arranged within the housing such that each of the anodes divides the internal space of the housing in a widthwise direction; and a plurality of cathode units interposed between the anodes to divide the space between the adjacent anodes into two electrolytic spaces, in which the wastewater introduced through the inlet port sequentially passes through the plurality of electrolytic spaces such that valuable metals are electro-deposited to the cathode units and recovered.

Each of the cathode units in an embodiment of the present invention is formed in a plate structure dividing the internal space of the housing in the width direction, of which both sides are inserted into the housing by sliding on the inner surface of the housing, and an overflow channel gap is defined above the cathode to allow wastewater to overflow.

Each of the cathode unit includes: a first electrode that is disposed between anodes such that the space between adjacent anodes into two electrolytic spaces, is formed in a plate structure dividing the internal space of a housing in the width direction, and defines an overflow channel space d that allows wastewater to overflow through the space above the cathode unit 30; a second cathode that is formed in a plate shape having a net structure at a predetermined distance from one side of the first cathode; a third cathode that is formed in a plate shape having a net structure at a predetermined distance from the other side of the first cathode; and cathode wires that are formed in a lump structure with an increase specific surface area that wastewater comes in contact to, and are filled in a space defined by the second cathode and the first cathode and a space defined by the third cathode and the first cathode, in which the valuable metals are electro-deposited and recovered to the cathode units having the cathode wires while wastewater introduced through the inlet port sequentially passes through the electrolytic spaces.

The cathode wires are disposed in close contact with each other in a coil spring shape.

The cathode wires have a pot scourer structure by gathering with adjacent cathode wires.

Each of the anode of the present invention is disposed between adjacent cathode unit or disposed between the inner wall of the front end or the rear end of the housing and the cathode unit, is formed in a plate structure dividing the internal space of the housing in the width direction and inserted in the housing by sliding both sides on the inner surfaces of the housing, and has the lower end that defines a wastewater discharge channel gap.

The housing includes: an external body that has a shape with the upper and lower portions open, has the inlet port communicating with the outside at the upper portion of the rear end, and has the outlet port at the upper portion of the front end; a lower cap that is combined with the lower portion of the external body and forms the bottom of the housing; and an upper cap that is combined with the upper portion of the external body 10a to form the top of the housing and has one or more gas exhaust holes.

The external body further includes a plurality of first drain values that communicates with the upper portion of the electrolytic space, at the upper portion of a side wall.

The lower cap further includes a plurality of second drain valves that communicates with the lower portions of the electrolytic spaces.

The housing further includes fluid blocking balls in the internal space which allow a gas to freely move and prevent wastewater from leaking by closing the gas exhaust hole in accordance with the internal pressure, and the upper cap further includes ball-retaining net fences that are formed in net structures to control free movement of the fluid blocking balls in the internal space of the housing by supporting the fluid blocking balls.

The cathodes and anodes of the cathode units are made of titanium (Ti) without being plated.

### Advantageous Effects

According to an electrolyzer having an increased contact specific surface area for recovery of valuable metals, first it is possible to increase the contact specific surface area of wastewater introduced in the electrolyzer by using cathode units each including a second cathode, a first cathode, a third cathode, and cathode wires filled in the spaces between the electrodes, such that it is possible to easily electro-deposit and recover the valuable metals even from wastewater containing a small amount of valuable metals.

Second it is possible to achieve high electrolysis efficiency because the cathode units are disposed between the anodes and a plurality of electrolytic spaces is defined, such that valuable metals are electro-deposited while wastewater sequentially passes the electrolytic spaces.

Third, it is possible to increase stability of the electrolyzer because a gas generated in the electrolysis process is discharged first by gas exhaust holes formed in the top of the housing, and to prevent wastewater from leaking by using fluid blocking balls that closes the gas exhaust holes by the internal pressure.

### Description of Drawings

FIG. 1 is a schematic view showing an electrolyzer for recovering valuable metals according to the related art.
FIG. 2 is a side cross-sectional view showing an embodiment of an electrolyzer having an increased contact specific surface area for recovering valuable metals according to the present invention.
FIG. 3 is a side cross-sectional view showing an embodiment of an electrolyzer having an increased contact specific surface area for recovering valuable metals according to the present invention.
FIG. 4 is a side cross-sectional view showing another embodiment of an electrolyzer having an increased contact specific surface area for recovering valuable metals according to the present invention.
FIG. 5 is a plan view showing another embodiment of an electrolyzer having an increased contact specific surface area for recovering valuable metals according to the present invention.
FIG. 6 is a view showing embodiments of a cathode wire that is applied to an electrolyzer having an increased contact specific surface area for recovering valuable metals according to the present invention.

### Mode for Invention

Hereinafter, preferred embodiments of the present invention are described with reference to the accompanying drawings such that those skilled in the art can easily implement the present invention.

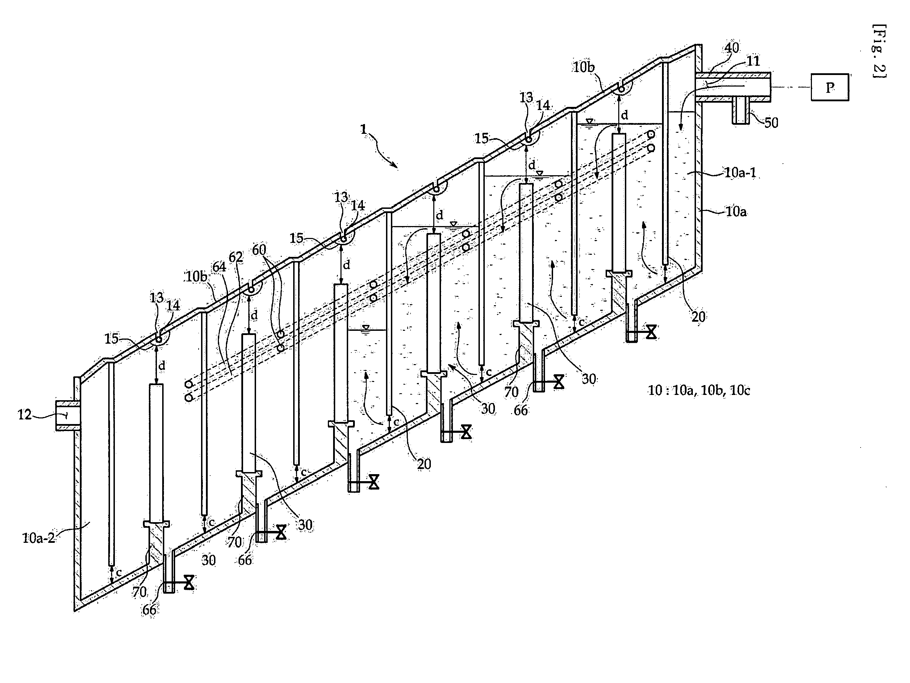

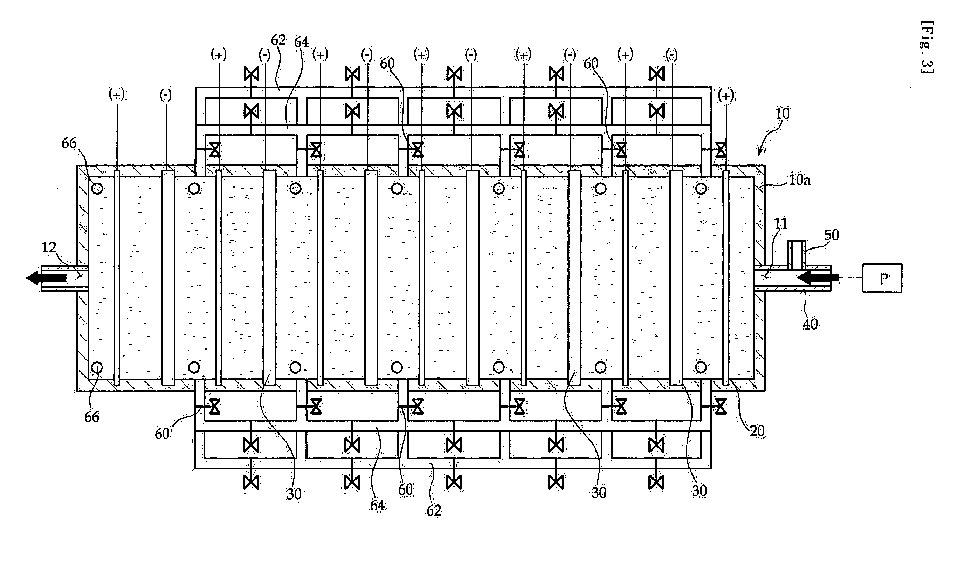

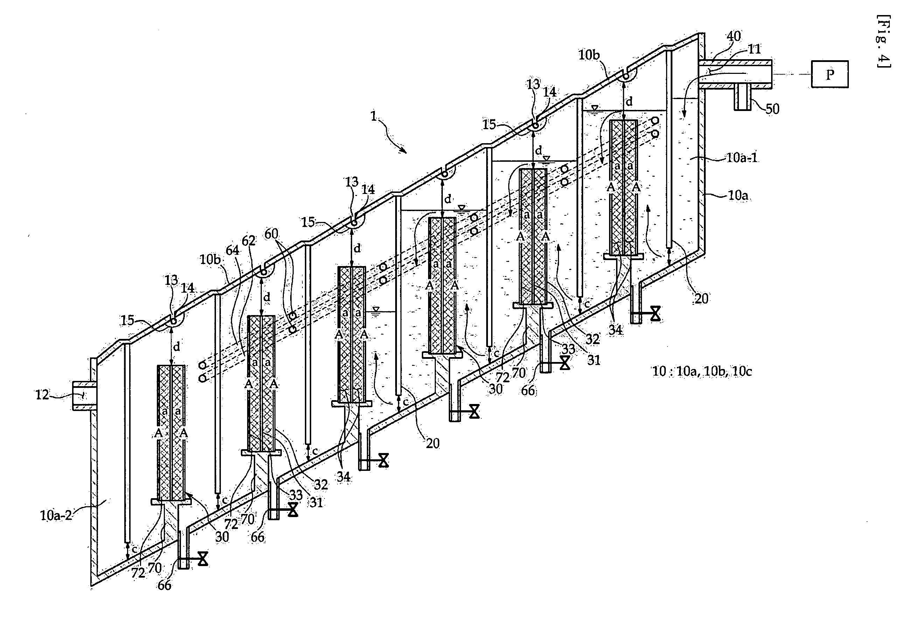

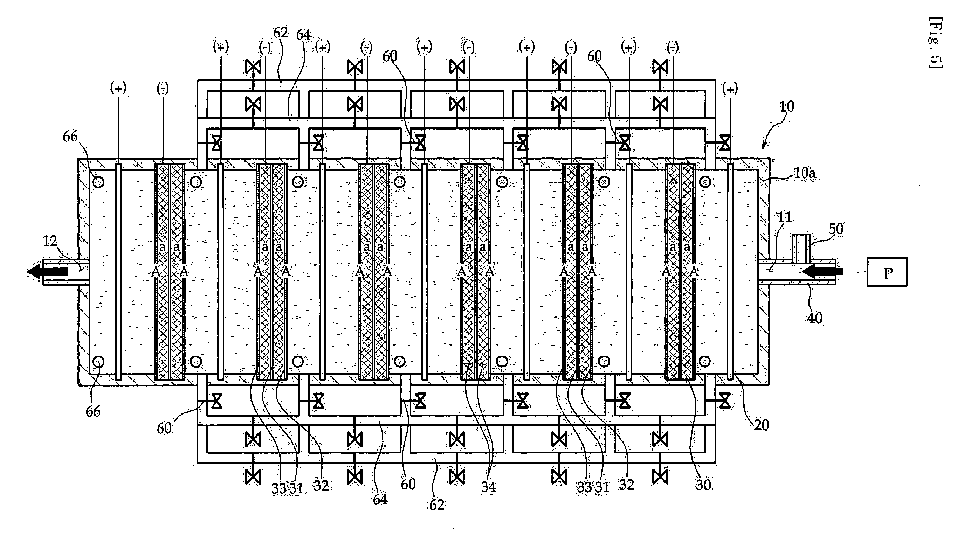

FIG. 2 is a side cross-sectional view showing an embodiment of an electrolyzer having an increased contact specific surface area for recovering valuable metals according to the present invention. FIG. 3 is a side cross-sectional view showing an embodiment of an electrolyzer having an increased contact specific surface area for recovering valuable metals according to the present invention. FIG. 4 is a side cross-sectional view showing an electrolyzer having an increased contact specific surface area for recovering valuable metals according to the present invention. FIG. 5 is a plan view showing an electrolyzer having an increased contact specific surface area for recovering valuable metals according to the present invention. The present invention is described hereafter with reference to FIGS. 2 to 5.

The present invention relates to an electrolyzer that has electrodes of anodes and cathodes and recovers by electro-depositing valuable metals in wastewater, using electrolysis and that includes: a housing having a rear end with an inlet port and a front end with an outlet port, and having an internal space with a downwardly inclined bottom; a plurality of anodes arranged within the housing such that each of the anodes divides the internal space of the housing in a widthwise direction; and a plurality of cathode units interposed between the anodes to divide the space between the adjacent anodes into two electrolytic spaces.

Next, the wastewater introduced through the inlet port sequentially passes through the plurality of electrolytic spaces such that valuable metals are electro-deposited to the cathode units and recovered.

The housing of the present invention may further have gas exhaust holes through the top. Accordingly, a gas is discharged through the gas exhaust hole and discharged to the outside through the outlet port.

As shown in the figures, an electrolyzer 1 having an increased contact specific surface area for recovering valuable metals according to the present invention is configured to be able to increase electrolysis efficiency by maximally increasing the specific surface areas of the electrodes that wastewater introduced in the electrolyzer 1 comes in contact with such that valuable metals, which can be recycled from plating-wastewater or wastewater containing valuable metals, can be efficiently electro-deposited and recovered, and to be able to efficiently electro-deposit and recover the valuable metals even from wastewater containing a small amount of valuable metals by increasing the electrolytic space.

For this configuration, the electrolyzer 1 for recovering valuable metals according to the present invention includes a plurality of anodes 20 that is disposed at predetermined distances in a housing and cathode units 30 that are disposed between adjacent two anodes 20 to form electrolytic spaces together with the anodes and where valuable metals are electro-deposited, as power is supplied, in order to electro-deposit the valuable metals in wastewater by using electrolysis with the electrodes of anodes and cathodes.

The housing 10 has an internal space that is defined by the inlet port 11 through which wastewater is introduced at the rear end, the outlet port 12 at the front end, and the gas exhaust holes 13 at the top, and provides a space where the wastewater is electrolyzed. Preferably, the inlet port 11 may be formed through the upper surface of the rear end of the housing 10, the outlet port 12 may be formed at the upper portion of the front end, and the gas exhaust holes 13 may be formed through the top of the housing 10.

The cathode units 30 each divide each of the spaces between the anodes and the cathodes into two electrolytic spaces A.

The anodes 20 are disposed in the internal space of the housing 10 and divide the internal space in the width direction.

The electrolyzer 1 for recovering valuable metals which has the configuration that allows valuable metals in wastewater introduced through the inlet port of the housing to be recovered by being electro-deposited to the cathode units 30 while the wastewater sequentially passes through the electrolytic spaces A.

The gas generated in the electro-deposition process, that is the electrolysis process in the electrolytic spaces is discharged to the outside of the housing 10 through the gas exhaust holes 13.

The wastewater with the valuable metals recovered is discharged to the outside through the outlet port 12 of the housing 10.

The gas exhaust holes 13 are provided to discharge first the gas that fails to come out of the internal space of the housing 10 and remains therein while the wastewater passes through the electrolytic spaces A in the electrolysis process generated in the housing 10.

This is because it is necessary in order to prevent damage to the electrolyzer 1 and the possibility of an accident due to the gas remaining in the internal space.

The anodes 20 and the cathode units 30 are connected with an external power source (not shown) by electrode tips protruding outward from the housing 10, as in the technology that is commonly known in the art, and supplied with power, and show a positive charge and a negative charge, respectively. Preferably, the housing 10 with the protruding electrode tips has a structure that prevents wastewater from leaking outside.

In the embodiments shown in the figures, the housing 10 may be formed in a box shape having an internal space and declining from the upper portion of the rear end to the lower portion of the front end.

In this case, the anodes 20 and the cathode units 30 may be formed in plate shapes that divide the internal space of the housing 10 in the width direction.

As shown in FIGS. 2 and 3, each of the cathode units 30 in an embodiment of the present invention is formed in a plate structure dividing the internal space of the housing 10 in the width direction, of which both sides are inserted into the housing 10 by sliding on the inner surface of the housing 10, and an overflow channel gap d is defined above the cathode 30 to allow wastewater to overflow.

As shown in the figures, when the cathodes are formed in plate structures, it has the advantage of being able to recover valuable metals, such as nickel (Ni), copper (Cu), or iron (Fe), from high-concentration wastewater.

According to the electrolyzer 1 for recovering valuable metals having the configuration of the invention, the valuable metals in wastewater are electro-deposited to the cathode units 30 and recovered while the wastewater introduced through the inlet port of the housing 10 sequentially passes through the electrolytic spaces A.

The cathode units 30 may be fixed with the lower ends seated in seating grooves 72 formed on the bottom of the housing 10, that is, the inner surface of a lower cap 10c such that wastewater introduced in the internal space can overflow and flow into the adjacent electrolytic spaces through the portions above the cathode units 30.

It is preferable that the upper portion of the cathode unit 30 defines the overflow channel gap d together with the bottom of an upper cap 10b to guide wastewater to be able to easily overflow above the cathode unit 30. For this configuration, it is preferable that both sides of the cathode unit 30 are in close contact with the both inner surfaces of the housing to prevent wastewater from flowing into the next electrolytic space through both sides of the cathode unit 30.

That is, cathode unit 30 may be disposed in the housing 10 by sliding both sides into the housing 10 by sliding on both sides of the housing 10 and seating the lower end into the seating groove 72.

The electrolyzer 1 having an increased contact specific surface area for recovering valuable metals according to an embodiment of the present invention increases the ratio of recovery of valuable metals by repeating the electrolysis process of wastewater several times, by defining the plurality of electrolytic spaces by disposing the cathode units 30 between the anodes 20.

The wastewater overflows above the cathode unit 30 and flows into the next electrolytic space A and flows into the next electrolytic space A through the portion under the anode 20, such that it sequentially passes through the inside of the housing 10.

Further, as shown in FIGS. 4 and 5, in another embodiment of an electrolyzer 1 having an increased contact specific surface area for recovering valuable metals of the present invention, each of cathode units 30 where valuable metals in wastewater are practically electro-deposited and recovered in an electrolysis process includes: a first electrode 31 that is disposed between anodes 20 such that the space between adjacent anodes 20 into two electrolytic spaces, is formed in a plate structure dividing the internal space of a housing in the width direction, and defines an overflow channel space d that allows wastewater to overflow through the space above the cathode unit 30; a second cathode 32 that is formed in a plate shape having a net structure at a predetermined distance from one side of the first cathode; a third cathode 33 that is formed in a plate shape having a net structure at a predetermined distance from the other side of the first cathode; and cathode wires 34 that are formed in a lump structure with an increase specific surface area that wastewater comes in contact to, and are filled in a space defined by the second cathode and the first cathode and a space defined by the third cathode and the first cathode.

Next, valuable metals are electro-deposited and recovered to the cathode units having the cathode wires while wastewater introduced through the inlet port sequentially passes through the electrolytic spaces.

The cathode wires 34 are filled in a lump at a side in the electrolytic space. It is preferable to dispose the two cathodes 32, 33 having net structures and the cathode 31 having a plate structure between the two cathodes and dispose the cathode wire in a lump in the spaces a defined by the cathode 31 having a plate structure and the cathodes 32, 33 having net structures, in order to increase the contact specific surface area of wastewater through the cathode wires.

According to the electrolyzer 1 for recovering valuable metals having the configuration of the invention, the valuable metals in wastewater are electro-deposited to the cathode units 30 including the lump of cathode wires 34 and recovered while the wastewater introduced through the inlet port of the housing 10 sequentially passes through the electrolytic spaces A.

In this configuration, it is preferable that the bottom of the cathode unit 30 is blocked by a net structure of a plate structure such that the cathode wires 34 filled in the space a is not separated when being attached/detached in the electrolyzer 1, if necessary.

The cathode units 30 may be fixed with the lower ends seated in seating grooves 72 formed on the bottom of the housing 10, that is, the inner surface of a lower cap 10c such that wastewater introduced in the internal space can overflow and flow into the adjacent electrolytic spaces through the portions above the first cathodes 31.

It is preferable that the upper portion of the first cathode 31 defines the overflow channel gap d together with the bottom of an upper cap 10b to guide wastewater to be able to easily overflow above the first cathode 31. For this configuration, it is preferable that both sides of the cathode unit 30 are in close contact with the both inner surfaces of the housing to prevent wastewater from flowing into the next electrolytic space through both sides of the cathode unit 30.

That is, cathode unit 30 may be disposed in the housing 10 by sliding both sides into the housing 10 by sliding on both sides of the housing 10 and seating the lower end into the seating groove 72.

The electrolyzer 1 having an increased contact specific surface area for recovering valuable metals according to an embodiment of the present invention increases the contact specific surface area by filling the wires 34 in the spaces a between the cathodes having a net structure of a plate structure, and increases the ratio of recovery of valuable metals by repeating the electrolysis process of wastewater several times, by defining the plurality of electrolytic spaces by disposing the cathode units 30 between the anodes 20.

For this configuration, a plurality of cathode wires is disposed in close contact with each other in a coil spring shape.

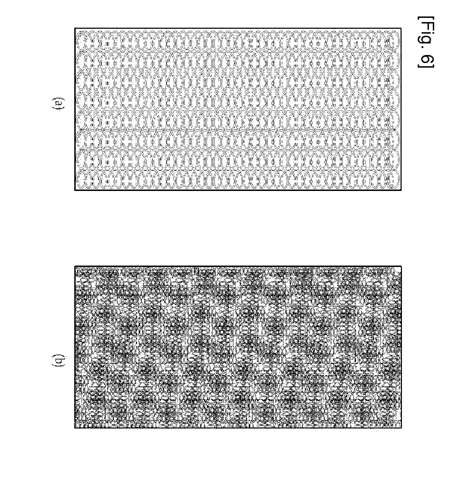

For example, the cathode wire 34, as shown in FIG. 6, is filled and positioned in one space a of the electrolytic space A by the second electrode 32 and the third electrode 33 of the cathode unit 30.

The cathode wires have a pot scourer structure by gathering with adjacent cathode wires.

As shown in the figure, by the structure of the filled cathode wires 34, the specific surface are of the cathode unit 30 is maximally increased and the amount of valuable metals electro-deposited from wastewater is increased, such that it is possible to increase the entire electrolysis efficiency and the ratio of valuable metals.

In other words, the cathode wires 34 may be filled in a coil spring or pot scourer structure by gathering with the adjacent cathode wires 34, to be easily attached/detached in the spaces a and increase the specific surface area.

The wastewater overflows above the first cathodes 31 and flows into the next electrolytic space A and flows into the next electrolytic space A through the portion under the anode 20, such that it sequentially passes through the inside of the housing 10.

In the embodiments of the present invention, the seating grooves 72, a shown in the figures, may be formed on the tops of fixing portions 70 formed on the bottom in the internal space of the housing 10.

It is preferable that the lower end of the cathode unit 30 is seated in the seating groove 72 to be easily attached/detached to/from the seating groove 72 in order to easily replace the cathode unit 30.

In the embodiments of the present invention, each of the anode 20 of the present invention is disposed between adjacent cathode unit 30 or disposed between the inner wall of the front end or the rear end of the housing 10 and the cathode unit 30, is formed in a plate structure dividing the internal space of the housing 10 in the width direction and inserted in the housing 10 by sliding both sides on the inner surfaces of the housing 10, and has the lower end that defines a wastewater discharge channel gap c.

It is preferable that the upper end of each of the anodes 20 is in close contact with the bottom of the upper cap 10b to prevent an exhaust gas collecting to the upper portion from infiltrating into the adjacent housing space. That is, this is for preventing the exhaust gas collecting at the portion above the cathode unit 30 between two adjacent anodes 30 from infiltrating into the portion above another cathode unit 30.

As shown in the figure, as the cathode unit 30 is disposed in the space defined by two adjacent anodes 20, the cathode unit 30 defines the electrolytic spaces A together with the anodes 20.

Two adjacent electrolytic spaces are connected by an S-shaped channel, such that valuable metals are electro-deposited and recovered to the cathode units 30 while wastewater introduced through the inlet port 11 sequentially passes through the electrolytic spaces A, and then the wastewater is discharged outside through the outlet port 12.

In the embodiments of the present invention, the housing includes: an external body 10a that has a shape with the upper and lower portions open, has the inlet port 11 communicating with the outside at the upper portion of the rear end, and has the outlet port 12 at the upper portion of the front end; a lower cap 10c that is combined with the lower portion of the external body 10a and forms the bottom of the housing 10; and an upper cap 10b that is combined with the upper portion of the external body 10a to form the top of the housing and has one or more gas exhaust holes 13.

The lower cap 10c forms the bottom of the housing by being fastened to the lower portion of the external body 10a by fasteners, such as bolts.

The upper cap 10b forms the top of the housing by being fastened to the upper portion of the external body 10a by fasteners, such as bolts, and has the gas exhaust holes 13 formed through the upper cap 10b, at predetermined positions.

The inlet port 11 is connected with an external inlet pipe 40 through which wastewater flows from the outside and an external pump P that forcibly introduces wastewater into the housing 10 may be further disposed at one side of the external inlet pipe 40.

An inlet channel 10a-1 defined by the rear end wall of the external body 10a and the adjacent anode 20 communicates with the inlet port 11. Wastewater introduced into the inlet channel 10a-1 can flow into the adjacent electrolytic space through the portion under the lower end of the anode 20.

The external inlet pipe 40 may further has an additive inlet pipe 50 for forcibly injecting a current density additive for increasing electric conductivity, at one side of the external inlet pipe 40.

In this configuration, a control valve (not shown) is further disposed in the additive inlet pipe 50 to control the inflow and the amount of inflow of the current density additive, which is injected manually or automatically, by controlling the control valve in accordance with the manual or automatic injection.

Further, an outlet channel 10a-2 defined by the front end wall of the external body 10a and the adjacent anode 20 communicates with the outlet port 12. Wastewater passing through the portion under the anode 20 in the electrolytic space adjacent to the outlet channel 10a-2 flows into the outlet channel 10a-2 and can be discharged outside through the outlet port 12.

The external body 10a further includes a plurality of first drain values 60 that communicates with the upper portion of the electrolytic space, at the upper portion of a side wall.

As shown in the figure, each of the first drain valves 60 prevents wastewater from overflowing to the portion above the cathode unit when the first drain valve 60 is open while communicating with the upper portion of the electrolytic space A, such that it is possible to completely remove the wastewater in the next electrolytic space. Further, the first drain valve 60 makes it easy to replace the anode or the cathode unit by preventing wastewater from overflowing to the next electrolytic space.

Further, the first drain valves 60 may be arranged in a line in the longitudinal direction of the side wall of the external body 10a, in which the first drain valves 60 arranged in a line may be connected to communicate with each other by a drain pipe 62.

It is possible to control the flow of wastewater between electrolytic spaces, which are not adjacent to each other, by using the first drain valves 60. For example, it is possible to allow the wastewater to flow from the electrolytic space at the inlet portion to the electrolytic space at the outlet port.

Further, the external body 10a may further includes first drain valves 60 arranged in another line, parallel with the line of the first drain valves 60, in the longitudinal direction of the side wall of the external body 10a. In this configuration, the first drain valves 60 in another line may be connected to communicate with a drain pipe 64.

The first drain valves 60 connected to communicate with each other by the drain pipe 64, as described above, perform the same function as the first drain valves 60 connected by the drain pipe 62.

It is preferable to connect the drain pipe 62 with the drain pipe 64 such that they are communicate with each other, in order to more efficiently discharge wastewater to the outside through the upper portion of the side wall of the external body 10a.

The lower cap 10c further includes a plurality of second drain valves 66 that communicates with the lower portions of the electrolytic spaces.

As shown in the figure, the second drain valves 66 allows the lower portions of the electrolytic spaces to communicate with the outside, at the lower cap 10c.

In this case, it is preferable that the second drain valves 66 communicate with the lower portions of the electrolytic spaces A, adjacent to the rear ends of the fixing portions 70 formed on the top of the lower cap 10c. Since the housing 10 generally inclines, wastewater may collect around the rear ends of the fixing portions 70, such that it is necessary to position the second drain valves 66 at the rear ends of the fixing portion 70 in order to completely remove wastewater from the housing 10.

Further, the housing 10 further includes fluid blocking balls 14 in the internal space which allow a gas to freely move and prevent wastewater from leaking by closing the gas exhaust hole 13 in accordance with the internal pressure, and the upper cap 10b further includes ball-retaining net fences 15 that are formed in net structures to control free movement of the fluid blocking balls 14 in the internal space of the housing 10 by supporting the fluid blocking balls 14.

The fluid blocking balls 14 can allow a gas to be freely moved and discharged and prevent wastewater in the internal space from leaking, by closing the gas exhaust holes 13 in accordance with the internal pressure of the internal space during an electrolysis process.

The gas exhaust holes 14 are formed through the upper cap 10b and the ball-retaining net fences 15 support the fluid blocking balls 14 on the inner surface of the upper cap 10b, such that free movement of the fluid blocking balls 14 in the internal space of the housing is controlled.

That is, the fluid blocking balls 14 disposed around the gas exhaust holes 13 are moved to close the gas exhaust holes 13 by the ball-retaining net fences 15 in accordance with the internal pressure, thereby preventing wastewater from leaking.

The cathodes and anodes of the cathode units are made of titanium (Ti) without being plated.

The electrodes of the anodes 20 and the cathode units 30 that are applied to the electrolyzer 1 for recovering valuable metals of the present invention are preferably made of titanium (Ti) and the titanium (Ti) makes it possible to achieve high-purity valuable metals without creating impurities when the valuable metals are achieved by nitrohydrochloric acid in the next process.

Hereafter, the process of recovering valuable metals, that is, the electrolysis process of the electrolyzer 1 having an increased contact surface area for recovery of valuable metals according to another embodiment of the present invention is described.

First, wastewater containing valuable metals is introduced into the internal space of the housing 10 by a pumping force provided from the external pump P along the external inlet pipe 40.

That is, the wastewater is introduced into the inlet channel 10a-1 through the inlet port 11 of the external body 10a.

Next, the wastewater introduced in the electrolytic space flows to the next electrolytic space while overflowing through an S-shaped channel above the first cathode 31.

Next, the wastewater flows into the next electrolytic space A through a lower wastewater outlet channel gap c under the anode.

The wastewater is finally discharged outside through the outlet port 12 by repeating these processes.

Cathode wires 34 are filled and positioned in a lump in a space a defined by the second cathode 32 and the first cathode 31 of the cathode unit 30 and a space a defined by the third cathode 33 and the first cathode 31.

In this configuration, the second cathode 32 and the third cathode 33 are cathodes having a net structure, such that wastewater comes in contact with the surface of the cathode wires 34 through the net structures.

Meanwhile, when power is supplied to electrode tips protruding outside from the housing, charge moves to the cathode units 30 and the group of anodes 20, such that the valuable metals in wastewater are electro-deposited and recovered to the cathode units 30, in detail, the lump of cathode wires 34 with the largest specific surface area.

Meanwhile, when the housing is fully filled with wastewater due to non-smooth discharge of the wastewater through the outlet port 12 when the wastewater is introduced into the housing 10 through the inlet port 11, the wastewater stably passes through the electrolytic spaces without leaking through the gas exhaust holes 13 by the fluid blocking balls 14.

Further, the gas generated in the electrolysis process is discharged outside through the gas exhaust holes 13, such that it is possible to improve stability of the electrolyzer 1.

Meanwhile, it is possible to increase the ratio of recovery of valuable metals, if necessary, by controlling the control valve (not shown) of the additive inlet pipe 50 such that a predetermined amount of a current density additive is introduced into the internal space of the housing 10.

Therefore, it is possible to discharge wastewater containing valuable metals having concentration of 0.5 to 2 ppm through the outlet port when processing wastewater containing valuable metals having concentration of 50 ppm.

Although the present invention is described above with reference to preferred embodiments, the present invention is not limited to the embodiments and should be construed on the basis of claims. Further, the present invention may be changed and modified in various ways by those skilled in the art without departing from a range equivalent to claims and the spirit of the present invention.

### Industrial Applicability

The present invention provides an electrolyzer having an increased contact specific surface area for recovery of valuable metals makes it possible to increase the contact specific surface area of wastewater introduced in the electrolyzer by using cathode units each including a second cathode, a first cathode, a third cathode, and cathode wires filled in the spaces between the electrodes, to easily electro-deposit and recover the valuable metals even from wastewater containing a small amount of valuable metals, to achieve high electrolysis efficiency because the cathode units are disposed between the anodes and a plurality of electrolytic spaces are defined, such that valuable metals are electro-deposited while wastewater sequentially passes the electrolytic spaces, to increase stability of the electrolyzer because a gas generated in the electrolysis process is discharged first by gas exhaust holes formed in the top of the housing, and to prevent wastewater from leaking by using fluid blocking balls that closes the gas exhaust holes by the internal pressure, if necessary; therefore, the present invention has industrial applicability.

## Claims

1. An electrolyzer having increased contact specific surface area for the recovery of valuable, which has anodes and cathodes and recover valuable metals by electro-depositing the valuable metals from wastewater by using electrolysis, the electrolyzer comprises:
a housing having a rear end with an inlet port and a front end with an outlet port, and having an internal space with a downwardly inclined bottom;
a plurality of anodes arranged within the housing such that each of the anodes divides the internal space of the housing in a widthwise direction; and
a plurality of cathode units interposed between the anodes to divide the space between the adjacent anodes into two electrolytic spaces,
wherein the wastewater introduced through the inlet port sequentially passes through the plurality of electrolytic spaces such that valuable metals are electro-deposited to the cathode units and discharged through the outlet port
wherein each of the cathode unit includes:
a first electrode that is disposed between anodes such that the space between adjacent anodes is divided into two electrolytic spaces, is formed in a plate structure dividing the internal space of a housing in the width direction, and forms an overflow channel gap that allows wastewater to overflow through the space above the cathode unit;
a second cathode that is formed in a plate shape having a net structure at a predetermined distance from one side of the first cathode;
a third cathode that is formed in a plate shape having a net structure at a predetermined distance from the other side of the first cathode; and
cathode wires that are formed in a lump structure with an increase specific surface area that wastewater comes in contact to, and are filled in a space formed by the second cathode and the first cathode and a space formed by the third cathode and the first cathode,
wherein the valuable metals are electro-deposited and recovered to the cathode units having the cathode wires while wastewater introduced through the inlet port sequentially passes through the electrolytic spaces.

2. The electrolyzer according to claim 1, wherein each of the cathode units is formed in a plate structure dividing the internal space of the housing in the width direction, of which both sides are inserted into the housing by sliding on the inner surface of the housing, and
an overflow channel gap is formed above the cathode to allow wastewater to overflow.

3. The electrolyzer according to claim 1, wherein the cathode wires are disposed in close contact with a coil spring shape.

4. The electrolyzer according to claim 1, wherein the cathode wires have a pot scourer structure by gathering with adjacent cathode wires.

5. The electrolyzer according to claim 1, wherein each of the anode is disposed between adjacent cathode unit or disposed between the inner wall of the front end or the rear end of the housing and the cathode unit, and is formed in a plate structure dividing the internal space of the housing in the width direction and inserted in the housing by sliding both sides on the inner surfaces of the housing, and has the lower end that forms a wastewater discharge channel gap.

6. The electrolyzer according to claim 1, wherein the housing includes:
an external body that has a shape with the upper and lower portions open, has the inlet port communicating with the outside at the upper portion of the rear end, and has the outlet port at the upper portion of the front end;
a lower cap that is combined with the lower portion of the external body and forms the bottom of the housing; and
an upper cap that is combined with the upper portion of the external body to form the top of the housing and has one or more gas exhaust holes.

7. The electrolyzer according to claim 6, wherein the external body further includes a plurality of first drain values that communicates with the upper portion of the electrolytic space, at the upper portion of a side wall.

8. The electrolyzer according to claim 6, wherein the lower cap further includes a plurality of second drain valves that communicates with the lower portions of the electrolytic spaces.

9. The electrolyzer according to claim 6, wherein the housing further includes fluid blocking balls in the internal space which allow a gas to freely move and prevent wastewater from leaking by closing the gas exhaust hole in accordance with the internal pressure, and the upper cap further includes ball-retaining net fences that are formed in net structures to control free movement of the fluid blocking balls in the internal space of the housing by supporting the fluid blocking balls.

10. The electrolyzer according to claim 1, wherein the cathodes and anodes of the cathode units are made of titanium (Ti) without being plated.
